# EUROPEAN PATENT SPECIFICATION

(11) **EP 1 629 960 B1**
(45) Date of publication and mention of the grant of the patent: **14.05.2008**
(21) Application number: 05255254.4
(22) Date of filing: 25.08.2005
(51) Int. Cl.: B29D 11/00, B29C 33/00

(54) **Method and Molds for producing ophthalmic lenses & xA;**
Verfahren und Giessformen zur Herstellung von ophthalmischen Linsen
Procédé et Moules pour la fabrication de lentilles ophthalmiques& xA;

(30) Priority: 26.08.2004 US 926738
(43) Date of publication of application: 01.03.2006
(73) Proprietor: Johnson and Johnson Vision Care, Inc., Jacksonville, FL 32256 (US)
(72) Inventor: Ansell, Scott F., Jacksonville Florida 32218 (US); Yin, Changhong, St. Augustine Florida 32092 (US)
(74) Representative: Mercer, Christopher Paul

(56) References cited:
- WO-A-20/04016405
- US-A- 5 843 346
- US-B1- 6 582 631

## Description

### FIELD OF USE

This invention describes molds that are useful in the production of contact lenses and methods for their use.

### BACKGROUND

Contact lenses have been used commercially to improve vision since the 1950s. The first contact lenses were made of hard materials. Although these lenses are currently used, they are not suitable for all patients due to their poor initial comfort and their relatively low permeability to oxygen. Later developments in the field gave rise to soft contact lenses, based upon hydrogels, which are extremely popular today. These lenses have higher oxygen permeability and are often more comfortable to wear than contact lenses made of hard materials. Unlike hard lenses that are manufactured by lathing hard pieces of plastic, malleable soft contact lenses are often manufactured by forming the lens using a two part mold where each half has topography consistent with the desired final lens.

Two part lens molds typically contain a male member whose convex surface corresponds to the back curve of a finished lens and a female member whose concave surface corresponds to the front curve of a finished lens. To prepare lenses using these molds, an uncured lens formulation is placed between the concave and convex surfaces of the mold halves and subsequently cured. During curing the lens formulation will usually adhere to the mold. Typically, the cured lens and the mold are subsequently treated with a liquid medium in order to release the cured lens from the surface of the mold.

Although such lens preparation is straightforward, there are a number of requirements that must be satisfied in order to produce a useable lens. First, the material from which the mold is made must have properties that are chemically compatible with the uncured lens formulation. Second, the mold material should be compatible with the curing conditions. For example, lenses may be cured by either or both heat and light. If a lens is cured by transmitting light to the uncured polymer, it is important that the lens mold permit the transmission of light at the appropriate wavelength. Third, the mold material should not stick to the cured lens to a degree that prevents release of the cured lens. Often the lenses are produced in a manufacturing environment where it is important for the lenses to removably adhere to a designated lens mold half upon separation in a repeatable and predictable fashion. Therefore, the selection of appropriate materials to make the molds continues to be a subject of concern to those who produce soft contact lenses.

It is common to use materials such as polypropylene, polystyrene, polyethylene, polymethyl methacrylates, and modified polyolefins containing an alicyclic moiety in the main chain to prepare two part lens molds. Although these materials are useful, with discovery of different lens formulations, particularly silicone hydrogel lens formulations, other useful mold materials are needed.

Further, new developments in the field have led to contact lenses made from hydrogels and silicone hydrogels that are coated with polymers to improve the comfort of the lenses. Often lenses are coated by treating the cured lenses with a polymer. Recently polymer coated lenses have been produced by coating the surfaces of a two part mold with a polymer, adding an uncured formulation to the coated lens mold, curing the lens, and subsequently releasing the cured lens from the mold where the surface of said cured lens is coated with the polymer that was originally adhered to the surface of the mold.

US 5,843,346 discloses a method of cast molding contact lenses using mold sections injection molded from a specific class of thermoplastic, polyolefin resins. US 6,582,631 discloses a method for cast molding contact lenses wherein at least one mold section is injection molded from a metallocene-catalysed thermoplastic polyolefin. WO 2004/016405 discloses molds for contact lenses made from alicyclic co-polymers.

Therefore, there remains an unmet need to produce lens molds that may be used to produce different types of soft contact lenses.

### SUMMARY

Accordingly, the present invention includes improved molds and processes useful in the creation of an ophthalmic lens. According to the present invention, a lens forming mixture is cured in a cavity of a desired shape formed by two or more mold parts. At least one of the mold parts is molded from a Zieglar-Natta catalyst based polyolefin resin having a melt flow rate of less than 21g/10 minutes as per ASTM D 1238. The cavity can be in the shape and size of an ophthalmic lens.

Embodiments can include at least one of the mold parts being transparent to polymerization initiating radiation such that a polymerizable lens forming mixture can be deposited in the cavity and the mold part and polymerizable composition can be exposed to polymerization initiating radiation.

Some embodiments can also include a mold for forming an ophthalmic lens that includes a first mold part and a second mold part that are positioned relative to each other to form a cavity in a shape and size suitable to form an ophthalmic lens. At least one of the first mold part and the second mold part can include a lens forming surface. In addition, at least one of the first mold part and the second mold part is fashioned from a Zieglar-Natta catalyst based polyolefin resin having a melt flow rate of less than 21g/10 minutes.

In another aspect, in some embodiments, an additive can be added to the Zieglar-Natta catalyst based polyolefin resin to facilitate the separation of the first mold part and the second mold part or to reduce the adhesion of the cured lens to the molding surface.

Embodiments can also include a lens produced by dispensing an uncured lens formulation onto a surface of a mold part formed from a resin comprising a Zieglar-Natta catalyst based polyolefin having a melt flow rate of less than 21g/10 minutes; and curing said lens formulation under conditions suitable to the particular lens formulation. The lens can include, for example, a silicone hydrogel formulation or a hydrogel formulation. Specific examples can include a lens formed from: acquafilcon A, balafilcon A, and lotrafilcon A, etafilcon A, genfilcon A, lenefilcon A, polymacon and galyfilcon A, and senofilcon A and senofilcon A.

### DESCRIPTION OF THE DRAWINGS

FIG. 1 illustrates a mold assembly according to some embodiments of the present invention.
FIG. 2 illustrates a flow chart of exemplary steps that can be executed while implementing some embodiments of the present to create a mold part.
FIG. 3 illustrates a flow chart of exemplary steps that can be executed while implementing some embodiments of the present to create an ophthalmic lens.
FIG. 4 illustrates exemplary data indicating qualities of molds fashioned from a Zieglar-Natta based catalyst resin as compared with molds fashioned from metallocene catalyst based polyolefin resin.

### DETAILED DESCRIPTION OF THE INVENTION

Accordingly, the present invention includes molds and methods for making an ophthalmic lens according to claims 1 and 17. According to the present invention, at least one part of a multi-part mold that can be used in the manufacture ophthalmic lenses, is injection molded, or otherwise fashioned, from a thermoplastic polyolefin resin having a melt flow rate of less than 21 g/10 minute, as used herein, the term "melt flow rate" denotes the industry known standard ASTM D 1238.

Mold parts may be injection molded from the thermoplastic polyolefin resin by methods which are otherwise known in the art. Injection molding apparatus will typically include precision tooling that has been machined from a metal, such as, for example, brass, stainless steel or nickel or some combination thereof. Typically, tooling is fashioned in a desired shape and machined or polished to achieve precision surface quality. The precision surface in turn increases the quality of a mold part injection molded therefrom.

According to the teachings of the present invention, mold parts are fashioned using precision tooling and a particular class of thermoplastic polyolefin resins that provides favorable attributes for the manufacture of ophthalmic lenses (as described in more detail below). According to the present invention, mold parts are fashioned with precision tooling, from a Zieglar-Natta catalyst based polyolefin with a MFI of less than 21 g/10 minutes to produce ophthalmic lenses with improved characteristics conducive to the manufacture of ophthalmic lenses

Advantages of utilizing a polyolefin mold material with a MFI of less than 21 g/10 minutes can include a diminished number of holes, chips and tears in the manufactured lenses.

Holes in lenses are primarily a factor of surface tensions and environmental conditions (i.e. static charges/regions); a polyolefin surface is less sensitive to these conditions. Chip, tears and other edge defects in the lenses are typically a factor of the aggressive nature of a demolding process. Use of a polyolefin back curve mold part fashioned from a polyolefin with a MFI of less than 21 g/10 min. exposes a lens to much less aggression. In addition, use of Zieglar-Natta catalyst polyolefin in the manufacture of lens molds typically provides a cost effective solution as compared to metallocene catalyst polyolefins.

Accordingly, mold parts having a MFI of less than 21 g/10 min. can provide methods manufacture of ophthalmic lenses that are more efficient and produce higher yields than other resins and still provide lenses that demonstrate the same or better quality attributes, such as radius variations and surface qualities.

Generally, as referred to herein, a Zieglar-Natta catalyst is a substance that accelerates the rate of a chemical reaction, at some temperature, but without being transformed or consumed by the reaction, it involves a transition metal (such as, for example TiCl₃) and a co-catalyst (such as, for example a group III metal) and participates in the reaction but is neither a chemical reactant nor a chemical product.

Commercial Zieglar-Natta catalyst polyolefin materials having a MFI of less than 21 g/10 min. include, for example: a) the Zieglar-Natta polypropylene (sometimes referred to as znPP) resins available under the name PP 9544 MED clarified random copolymer for clean molding as per FDA regulation 21 CFR (c)3.2 made available by ExxonMobile Chemical Co. Polymers Group, Houston, Tex., USA, which is a random copolymer (znPP) with ethylene group and a MFI of approximately 12g/ 10 minute (hereinafter 9544 MED); b) Atofina Polypropylene 3761 with a MFI of 18 g/10 minute; and c) Atofina Polypropylene 3620WZ with a MFI of 18g/10 minute.

### Lenses

As used herein "lens" refers to any ophthalmic device that resides in or on the eye. These devices can provide optical correction or may be cosmetic. For example, the term lens can refer to a contact lens, intraocular lens, overlay lens, ocular insert, optical insert or other similar device through which vision is corrected or modified, or through which eye physiology is cosmetically enhanced (e.g. iris color) without impeding vision.

As used herein, the term "lens forming mixture" refers to a mixture of materials that can react, or be cured, to form an ophthalmic lens. Such a mixture includes polymerizable components (monomers), additives such as UV blockers and tints, photoinitiators or catalysts, and other additives one might desire in an ophthalmic lens such as a contact or intraocular lens. Suitable lens forming mixtures are described more fully in U.S. Pat. No. 5,849,209 (as a reactive monomer mix including cross linking agent and initiator); U.S. Pat. No. 5,770,669 (as a prepolymerization mixture including monomers and initiator); and U.S. Pat. No. 5,512,205 (as a prepolymer plus monomer system including crosslinkers and initiators).

In some embodiments, a preferred lens type can include a lens that is made from silicone elastomers or hydrogels, such as, for example, silicone hydrogels, fluorohydrogels, including those comprising silicone/hydrophilic macromers, silicone based monomers, initiators and additives. Lens forming mixtures, or soft contact lens formulations are disclosed, for example, in U.S. Patent No. 5,710,302, WO 9421698, EP 406161, JP 2000016905, U.S. Pat. No. 5,998,498, U.S. Pat. App. Ser. No. 09/957,299 filed on September 20, 2001, U.S. Pat. App. No. 09/532,943, U.S. Patent No. 6,087,415, U.S. Pat. No. 5,760,100, U.S. Pat. No. 5,776,999, U.S. Pat. No. 5,789,461, U.S. Pat. No. 5,849,811 and U.S. Pat. No. 5,965,631. Further polymers that may be used to form soft contact lenses are disclosed, for example, in the following U.S. Pat. Nos. 6,419,858; 6,308,314; and 6,416,690.

By way of non-limiting example, some preferred lens types can also include etafilcon A, genifilcon A, lenefilcon A, polymacon, acquafilcon A, balafilcon A, lotrafilcon A, galyfilcon A, senofilcon A, silicone hydrogels.

### Molds

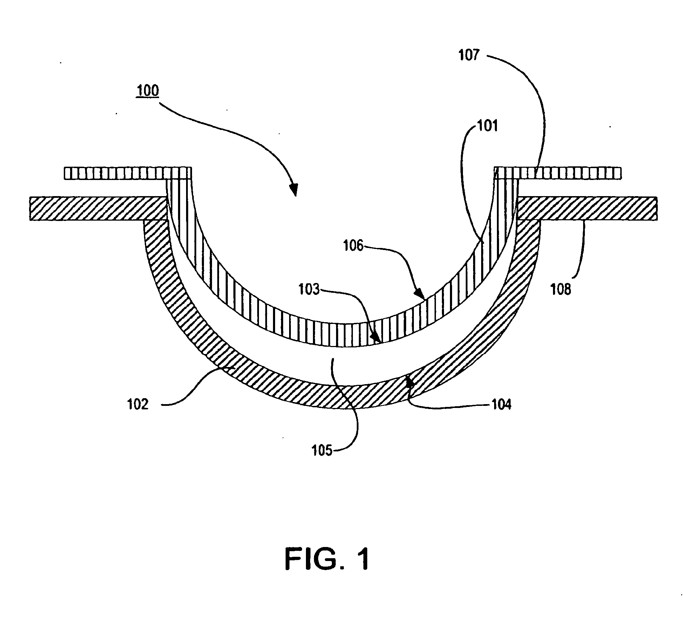

Referring now to Fig. 1, a diagram of an exemplary mold for an ophthalmic lens is illustrated. As used herein, the terms "mold" and "mold assembly" refer to a form 100 having a cavity 105 into which a lens forming mixture can be dispensed such that upon reaction or cure of the lens forming mixture (not illustrated), an ophthalmic lens of a desired shape is produced. The molds and mold assemblies 100 of this invention are made up of more than one "mold parts" or "mold pieces" 101-102. The mold parts 101-102 can be brought together such that a cavity 105 is formed between the mold parts 101-102 in which a lens can be formed. This combination of mold parts 101-102 is preferably temporary. Upon formation of the lens, the mold parts 101-102 can again be separated for removal of the lens.

A "mold part" as the term is used in this specification refers to a portion of mold 101-102, which when combined with another portion of a mold 101-102 forms a mold 100 (also referred to as a mold assembly 100). At least one mold part 101-102 has at least a portion of its surface 103-104 in contact with the lens forming mixture such that upon reaction or cure of the lens forming mixture that surface 103-104 provides a desired shape and form to the portion of the lens with which it is in contact. The same is true of at least one other mold part 101-102.

Thus, for example, in a preferred embodiment a mold assembly 100 is formed from two parts 101-102, a female concave piece (front piece) 102 and a male convex piece (back piece) 101 with a cavity formed between them. The portion of the concave surface 104 which makes contact with lens forming mixture has the curvature of the front curve of an ophthalmic lens to be produced in the mold assembly 100 and is sufficiently smooth and formed such that the surface of a ophthalmic lens formed by polymerization of the lens forming mixture which is in contact with the concave surface 104 is optically acceptable.

In some embodiments, the front mold piece 102 can also have an annular flange integral with and surrounding circular circumferential edge 108 and extends from it in a plane normal to the axis and extending from the flange (not shown).

The back mold piece 101 has a central curved section with a concave surface 106, convex surface 103 and circular circumferential edge 107, wherein the portion of the convex surface 103 in contact with the lens forming mixture has the curvature of the back curve of a ophthalmic lens to be produced in the mold assembly 100 and is sufficiently smooth and formed such that the surface of a ophthalmic lens formed by reaction or cure of the lens forming mixture in contact with the back surface 103 is optically acceptable. Accordingly, the inner concave surface 104 of the front mold half 102 defines the outer surface of the ophthalmic lens, while the outer convex surface 103 of the base mold half 101 defines the inner surface of the ophthalmic lens.

In some preferred embodiments, molds 100 can include two mold parts 101-102 as described above, where either or both the front curve part 102 or the back curve part 101 of the mold 100 is made of a Zieglar-Natta catalyzed polyolefin random copolymer and/or homopolymer with a MFI of about 21 g/10, minutes or less, such as for example, 9544 MED.

In some preferred methods of making molds 100 according to the present invention, injection molding is utilized according to known techniques, however, embodiments can also include molds fashioned by other techniques including, for example: lathing, diamond turning, or laser cutting.

Typically, lenses are formed on at least one surface of both mold parts 101-102. However, if need be one surface of the lenses may be formed from a mold part 101-102 and the other lens surface can be formed using a lathing method, or other methods.

As used herein "lens forming surface" means a surface 103-104 that is used to mold a lens. In some embodiments, any such surface 103-104 can have an optical quality surface finish, which indicates that it is sufficiently smooth and formed so that a lens surface fashioned by the polymerization of a lens forming material in contact with the molding surface is optically acceptable. Further, in some embodiments, the lens forming surface 103-104 can have a geometry that is necessary to impart to the lens surface the desired optical characteristics, including without limitation, spherical, aspherical and cylinder power, wave front aberration correction, corneal topography correction and the like as well as any combinations thereof.

### Methods

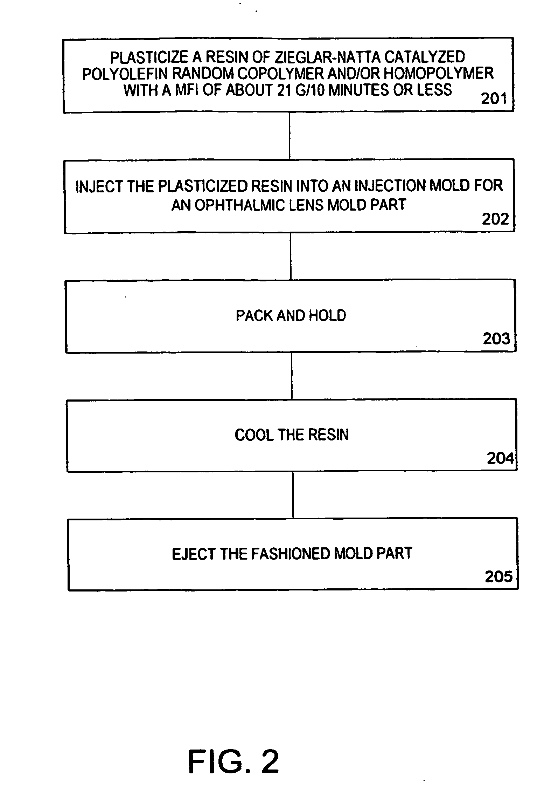

Referring now to Fig. 2, some embodiments of the present invention include methods of making an ophthalmic lens comprising, consisting essentially of, or consisting of the following described steps. At 201, a resin of a Zieglar-Natta catalyzed polyolefin random copolymer and/or homopolymer with a MFI of about 21 g/10 min. or less, is plasticized and prepared for use in an injection molding process. Injection molding techniques are well known and typically involve heating resin pellets beyond a melting point.

At 202, the plasticized resin is injected into an injection mold shaped in a fashion suitable for creating an ophthalmic lens mold part 101-102. At 203, the injection mold is typically placed in a pack and hold status for an appropriate amount of time, which can depend, for example upon the resin utilized and the shape and size of the mold part. At 204, the formed mold part 101-102 is allowed to cool and at 205, the mold part 101-102 can be ejected, or otherwise removed from the injection mold.

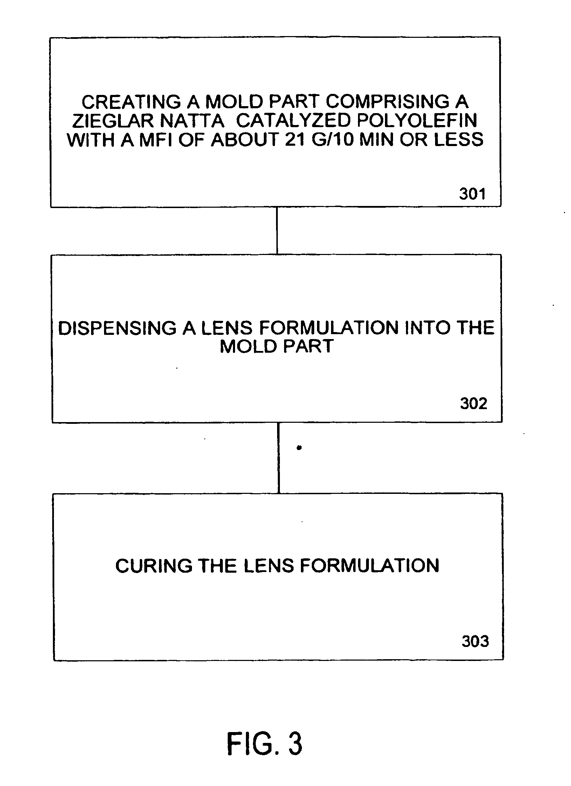

Referring now to Fig. 3, some embodiments of the present invention include methods of making an ophthalmic lens comprising, consisting essentially of, or consisting of the following steps. At 301 one or more mold parts 101-102 are created which comprise, consist essentially of, or consist of, a Zieglar-Natta catalyzed polyolefin random copolymer and/or homopolymer with a MFI of about 21 g/10 minutes or less as per ASTM D 1238. At 302, an uncured lens formulation is dispensed onto the one or more mold parts 101-102 and at 303, the lens formulation is cured under suitable conditions. Additional steps can include, for example, hydrating a cured lens until it releases from a mold part 101-102 and leaching acute ocular discomfort agents from the lens.

As used herein, the term "uncured" refers to the physical state of a lens formulation prior to final curing of the lens formulation to make the lens. In some embodiments, lens formulations can contain mixtures of monomers which are cured only once. Other embodiments can include partially cured lens formulations that contain monomers, partially cured monomers, macromers and other components. Examples of partially cured formulations are disclosed in U.S. Pat. Nos. 6,419,858; 6,308,314; and 6,416,690.

As used herein, the phrase "curing under suitable conditions" refers to any suitable method of curing lens formulations, such as using light, heat, and the appropriate catalysts to produce a cured lens.

### Additives

Aside from the Zieglar-Natta based polyolefin, the molds of the invention may contain additives that facilitate the separation of the lens forming surfaces, reduce the adhesion of the cured lens to the molding surface, or both. For example, additives such as metal or ammonium salts of stearic acid, amide waxes, polyethylene or polypropylene waxes, organic phosphate esters, glycerol esters or alcohol esters may be added to polypropylenes prior to forming a mold. Examples of such additives can include, but are not limited to: Dow Siloxane MB50-321 (a silicone dispersion), Nurcrel 535 & 932 (ethylene-methacrylic acid co-polymer resin Registry No. 25053-53-6), Erucamide (fatty acid amide Registry No. 112-84-5), Oleamide (fatty acid amide Registry No. 301-02-0), Mica (Registry No. 12001-26-2), Atmer 163 (fatty alkyl diethanolamine Registry No. 107043-84-5), Pluronic (polyoxypropylene-polyoxyethylene block co-polymer Registry No. 106392-12-5), Tetronic (alkyoxylated amine 110617-70-4), Flura (Registry No.7681-49-4), calcium stearate, zinc stearate, Super-Floss anti block (slip/anti blocking agent, Registry No. 61790-53-2), Zeospheres anti-block (slip/anti blocking agent); Ampacet 40604 (fatty acid amide), Kemamide (fatty acid amide), Licowax fatty acid amide, Hypermer B246SF, XNAP, polyethylene glycol monolaurate (anti-stat) epoxidized soy bean oil, talc (hydrated Magnsium silicate), calcium carbonate, behenic acid, pentaerythritol tetrastearate, succinic acid, epolene E43-Wax, methyl cellulose, cocamide (anti-blocking agent Registry No. 61789-19-3), poly vinyl pyrrolidinone (360,000 MW) and the additives disclosed in U.S. Pat No. 5,690,865 which is hereby incorporated by reference in its entirety.

In some embodiments, preferred additives can include polyvinyl pyrrolidinone, zinc stearate and glycerol mono stearate, where a weight percentage of additives based upon the total weight of the polymers is about 0.05 to about 10.0 weight percent, preferably about 0.05 to about 3.0, most preferably about 2.0 weight percent.

### Surfactants

In addition to additives, separation of the lens forming surfaces may be facilitated by applying surfactants to one or more of the lens forming surfaces 103-104. Examples of suitable surfactants can include Tween surfactants, particularly Tween 80 as described in U.S. Pat. No. 5,837,314. Other examples of surfactants are disclosed in U.S. Pat. No. 5,264,161.

### Comparative Mold Qualities

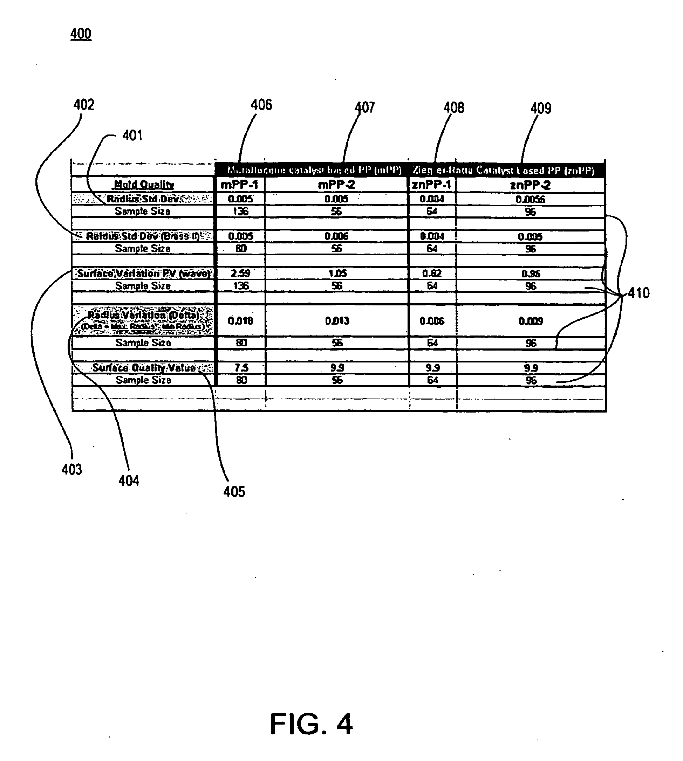

Referring now to Fig. 4, a chart 400 is provided which includes data quantifying various mold qualities 401-405 for sample molds made from Metallocene catalyst based polypropylene 406-407 and Zieglar-Natta Catalyst based polypropylene 408-409 with MFI<21.

Mold qualities that were measured include radius standard deviation Zygo 401, radius standard deviation Brass II 402, surface variation 403, radius variation delta 404 and surface variation 405. Sample sizes for the various mold samples are also indicated 410. In general, the sample lenses created in the Zieglar-Natta molds with a flow rate less than 21 g/10 min. returned equivalent or better quality indications than molds created from metallocene catalyst based polypropylene. For example, the radius standard deviation measurements 401-402 indicate that the Zieglar-Natta catalyst based polyolefins produced molds 408-409 with radius standard deviation measurements as good or better than the Metallocene catalyst based polyolefin molds 406-407.

In addition, molds fashioned from the Zieglar-Natta catalyst based polyolefins 408-409 had more favorable values for the surface variation PV (wave) 403 and the radius variation delta 404 as compared to the Metallocene catalyst based polypropylene molds 406-407. The surface quality values 405 were similar for both mold types 406-409.

Accordingly, the Zieglar-Natta catalyst based polyolefins were able to fashion molds with equal or superior qualities and also provide the economic and other benefits associated with Zieglar-Natta catalyst based polyolefins.

### Conclusion

The present invention, as described above and as further defined by the claims below, provides mold parts 101-102 fashioned from Zieglar-Natta catalyst based thermoplastic polyolefins with a MFI of about 21 g/10 min or less with processes suitable for a manufacturing environment, such as, for example: continuous, in-line or batched processes. The mold parts 101-102 can be provided with a high degree of precision and accuracy, and are therefore suitable for the manufacture of ophthalmic lens mold applications. For example, 9544 MED, a random copolymer (znPP) with 1.5% ethylene group, with an MFI of 12g/10 minute, is a commercially available polyolefin that can used to implement some particular embodiments of the present invention.

## Claims

1. A method of molding an ophthalmic lens, wherein a lens forming mixture is cured in a cavity (105) of a desired shape formed by two or more mold parts (101, 102); **characterised in that**:
at least one of the mold parts (101, 102) is molded from a Zieglar-Natta catalyst based polyolefin resin having a melt flow rate of less than 21g/10 minutes as per ASTM D 1238.

2. The method of claim 1, wherein a first mold part (102) comprises a concave surface (104), a second mold part (101) comprises a convex surface (103), and at least the second mold part (101) is molded from a Zieglar-Natta catalyst based thermoplastic polyolefin resin having a melt flow rate of less than 21g/10 minutes.

3. The method of claim 1, wherein a first mold part (102) comprises a concave surface (104) and a second mold part (101) comprises a convex surface (103) and both the first mold part (102) and the second mold part (101) are molded from a Zieglar-Natta catalyst based thermoplastic polyolefin resin having a melt flow rate of less than 21 g/10 minutes.

4. The method of claim 1 wherein at least one of the mold parts (101, 102) is transparent to polymerization initiating radiation and the cavity (105) comprises the shape and size of an ophthalmic lens, the method additionally comprising the steps of:
depositing lens forming mixture comprising a polymerizable composition in the cavity; and
exposing the mold parts and the polymerizable composition to polymerization initiating radiation.

5. The method of claim 4, wherein the Zieglar-Natta catalyst based polyolefin resin comprises Zieglar-Natta catalyst based resin with a MFI of 9 to 18 g/10 minutes.

6. The method of claim 4, wherein the Zieglar-Natta catalyst based polyolefin resin comprises Zieglar-Natta catalyst based resin with a MFI of 10 to 14 g/10 minutes.

7. The method of claim 4, wherein the Zieglar-Natta catalyst based polyolefin resin comprises ethylene group in the range comprising 0% to 5%.

8. The method of claim 1 wherein the uncured lens forming mixture comprises a silicone hydrogel formulation.

9. The method of claim 1 wherein the uncured lens forming mixture comprises a hydrogel formulation.

10. The method of claim 1 wherein the uncured lens forming mixture comprises at least one of: acquafilcon A, balafilcon A, and lotrafilcon A.

11. The method of claim 1 wherein the uncured lens forming mixture comprises at least one of: etafilcon A, genfilcon A, lenefilcon A, polymacon and galyfilcon A, and senofilcon A.

12. The method of claim 1 wherein the uncured lens forming mixture comprises senofilcon A.

13. The method of claim 1 wherein the surfaces of the cavity (105) formed by the two or more mold parts (101, 102) comprises an optical quality surface finish formed in a shape and size suitable for a front curve of an ophthalmic lens and a back curve of an ophthalmic lens.

14. The method of claim 1 wherein the Zieglar-Natta catalyst is a catalyst involved in creating unbranched polyolefin chains.

15. The method of claim 1 further comprising the step of hydrating the cured lens formulation until it release form a mold part (101, 102) to which it adhered.

16. The method of claim 1 further comprising the step of leaching the lens to remove acute ocular discomfort agents.

17. A mold (100) for forming an ophthalmic lens comprising:
a first mold part (101) and a second mold part (102) positioned relative to each other to form a cavity (105) in a shape and size suitable to form an ophthalmic lens;
at least one of the first mold part (101) and the second mold part (102) comprising a lens forming surface (103, 104); and
**characterised in that** at least one of the first mold part (101) and the second mold part (102) is fashioned from a Zieglar-Natta catalyst based polyolefin resin having a melt flow rate of less than 21 g/10 minutes.

18. The mold (100) of claim 17 additionally comprising an additive to the Zieglar-Natta catalyst based polyolefin resin suitable to facilitate the separation of the first mold part (101) and the second mold part (102).

19. The mold (100) of claim 17 additionally comprising an additive to the Zieglar-Natta catalyst based polyolefin resin suitable to reduce the adhesion of the cured lens to the molding surface (103, 104).

20. The mold of claim 17 wherein the Zieglar-Natta catalyst is a catalyst involved in creating unbranched polyolefin chains.

## Patentansprüche

1. Verfahren zum Formen einer ophthalmischen Linse, bei dem eine Linsen bildende Mischung in einem Hohlraum (105) einer gewünschten Form ausgehärtet wird, die durch zwei oder mehr Formteile (101, 102) gebildet wird; **dadurch gekennzeichnet, daß**:
wenigstens eines der Formteile (101, 102) aus einem auf einem Zieglar-Natta-Katalysator basierenden Polyolefinharz geformt ist, das eine Schmelzflußgeschwindigkeit von weniger als 21 g/10 Minuten gemäß ASTM D 1238 hat.

2. Verfahren nach Anspruch 1, bei dem ein erstes Formteil (102) eine konkave Fläche (104) aufweist, ein zweites Formteil (101) eine konvexe Fläche (103) aufweist und wenigstens das zweite Formteil (101) aus einem auf einem Zieglar-Natta-Katalysator basierenden thermoplastischen Polyolefinharz geformt ist, das eine Schmelzflußgeschwindigkeit von weniger als 21 g/10 Minuten hat.

3. Verfahren nach Anspruch 1, bei dem ein erstes Formteil (102) eine konkave Fläche (104) aufweist und ein zweites Formteil (101) eine konvexe Fläche (103) aufweist, und sowohl das erste Formteil (102) als auch das zweite Formteil (101) aus einem auf einem Zieglar-Natta-Katalysator basierenden thermoplastischen Polyolefinharz geformt sind, das eine Schmelzflußgeschwindigkeit von weniger als 21 g/10 Minuten hat.

4. Verfahren nach Anspruch 1, bei dem wenigstens eines der Formteile (101, 102) für polymerisationseinleitende Strahlung durchlässig ist und der Hohlraum (105) die Form und Größe einer ophthalmischen Linse aufweist, wobei das Verfahren zusätzlich die Schritte aufweist:
Ablegen einer Linsen bildenden Mischung, die eine polymerisierbare Zusammensetzung aufweist, in dem Hohlraum; und
Bestrahlen der Formteile und der polymerisierbaren Zusammensetzung mit polymerisationseinleitender Strahlung.

5. Verfahren nach Anspruch 4, bei dem das auf einem Zieglar-Natta-Katalysator basierende Polyolefinharz auf einem Zieglar-Natta-Katalysator basierendes Harz mit einem MFI von 9 bis 18 g/10 Minuten aufweist.

6. Verfahren nach Anspruch 4, bei dem das auf einem Zieglar-Natta-Katalysator basierende Polyolefinharz auf einem Zieglar-Natta-Katalysator basierendes Harz mit einem MFI von 10 bis 14 g/10 Minuten aufweist.

7. Verfahren nach Anspruch 4, bei dem das auf einem Zieglar-Natta-Katalysator basierende Polyolefinharz eine Ethylengruppe in dem Bereich aus 0 % bis 5 % aufweist.

8. Verfahren nach Anspruch 1, bei dem die ungehärtete, Linsen bildende Mischung eine Silikonhydrogel-Formulierung aufweist.

9. Verfahren nach Anspruch 1, bei dem die ungehärtete, Linsen bildende Mischung eine Hydrogelformulierung aufweist.

10. Verfahren nach Anspruch 1, bei dem die ungehärtete, Linsen bildende Mischung wenigstens eines aus Acquafilcon A, Balafilcon A und Lotrafilcon A aufweist.

11. Verfahren nach Anspruch 1, bei dem die ungehärtete, Linsen bildende Mischung wenigstens eines aus: Etafilcon A, Genfilcon A, Lenefilcon A, Polymacon und Galyfilcon A und Senofilcon A aufweist.

12. Verfahren nach Anspruch 1, bei dem die ungehärtete, Linsen bildende Mischung Senofilcon A aufweist.

13. Verfahren nach Anspruch 1, bei dem die Fläche des Hohlraums (105), der durch die zwei oder mehr Formteile (101, 102) gebildet ist, einer Oberflächenendauftrag optischer Qualität aufweist, der in einer Form und Stärke gebildet ist, die für eine vordere Krümmung einer ophthalmischen Linse und einer hintere Krümmung einer ophthalmischen Linse geeignet ist.

14. Verfahren nach Anspruch 1, bei dem der Zieglar-Natta-Katalysator ein Katalysator ist, der beim Erzeugen unverzweigter Polyolefinketten beteiligt ist.

15. Verfahren nach Anspruch 1, weiter mit dem Schritt des Hydrierens der gehärteten Linsenformulierung, bis es aus einem Formteil (101, 102) freigegeben wird, an dem sie anhaftet.

16. Verfahren nach Anspruch 1, weiter mit dem Prozeß des Auslaugens der Linse, um scharfe, am Auge Unbehagen hervorrufende Mittel zu beseitigen.

17. Form (100) zum Bilden einer ophthalmischen Linse, die aufweist:
ein erstes Formteil (101) und ein zweites Formteil (102), die relativ zueinander so angeordnet sind, daß sie einen Hohlraum (105) mit einer Form und Größe geeignet zum Bilden einer ophthalmischen Linse zu bilden;
wobei wenigstens eines, das erste Formteil (101) oder das zweite Formteil (102), eine Linsen bildende Fläche (103, 104) aufweist; und
**dadurch gekennzeichnet, daß** wenigstens eines, das erste Formteil (101) oder das zweite Formteil (102), aus einem auf einem Zieglar-Natta-Katalysator basierenden Polyolefinharz hergestellt ist, das eine Schmelzflußgeschwindigkeit von weniger als 21 g/10 Minuten hat.

18. Form (100) nach Anspruch 17, zusätzlich mit einem Additiv zu dem auf einem Zieglar-Natta-Katalysator basierenden Polyolefinharz, der dazu geeignet ist, die Trennung des ersten Formteils (101) von dem zweiten Formteil (102) zu vereinfachen.

19. Form (100) nach Anspruch 17, zusätzlich mit einem Additiv zu dem auf einem Zieglar-Natta-Katalysator basierenden Polyolefinharz, das geeignet ist, das Anhaften der gehärteten Linse an der Formfläche (103, 104) herabzusetzen.

20. Form nach Anspruch 17, bei dem der Zieglar-Natta-Katalysator ein Katalysator ist, der beim Erzeugen unverzweigter Polyoelfinketten beteiligt ist.

## Revendications

1. Procédé de moulage d'une lentille ophtalmique, dans lequel un mélange de formation de lentille est durci dans une empreinte (105) suivant une forme désirée formée de deux ou plusieurs parties de moule (101, 102) ; **caractérisé en ce qu'**au moins une des parties de moule (101, 102) est moulée dans une résine polyoléfine basée sur un catalyseur de Zieglar-Natta ayant un indice de fluidité à chaud inférieur à 21 g/10 minutes conformément au standard ASTM D1238.

2. Procédé selon la revendication 1, dans lequel une première partie de moule (102) comporte une surface concave (104), une deuxième partie de moule (101) comporte une surface convexe (103), et au moins la deuxième partie de moule (101) est moulée dans une résine polyoléfine thermoplastique basée sur un catalyseur de Zieglar-Natta ayant un indice de fluidité à chaud inférieur à 21 g/10 minutes.

3. Procédé selon la revendication 1, dans lequel une première partie de moule (102) comporte une surface concave (104) et une deuxième partie de moule (101) comporte une surface convexe (103) et la première partie de moule (102) et la deuxième partie de moule (101) sont moulées dans une résine polyoléfine thermoplastique basée sur un catalyseur de Zieglar-Natta ayant un indice de fluidité à chaud inférieur à 21 g/10 minutes.

4. Procédé selon la revendication 1, dans lequel au moins une des parties de moule (101, 102) est transparente à un rayonnement déclenchant une polymérisation et l'empreinte (105) comprend la forme et la taille d'une lentille ophtalmique, ce procédé comprenant en outre les étapes suivantes :
◆ déposer un mélange de formation de lentille consistant en une composition polymérisable dans l'empreinte ; et
◆ exposer les parties de moule et la composition polymérisable à un rayonnement déclenchant une polymérisation.

5. Procédé selon la revendication 4, dans lequel la résine polyoléfine basée sur un catalyseur de Zieglar-Natta consiste en une résine basée sur un catalyseur de Zieglar-Natta et ayant un indice de fluidité à chaud (MFI) de 9 à 18 g/10 minutes.

6. Procédé selon la revendication 4, dans lequel la résine polyoléfine basée sur un catalyseur de Zieglar-Natta consiste en une résine basée sur un catalyseur de Zieglar-Natta ayant un indice de fluidité à chaud (MFI) de 10 à 14 g/10 minutes.

7. Procédé selon la revendication 4, dans lequel la résine polyoléfine basée sur un catalyseur de Zieglar-Natta comprend un groupe éthylène dans la plage de 0 % à 5 %.

8. Procédé selon la revendication 1, dans lequel le mélange non durci de formation de lentille comprend une formulation d'hydrogel silicone.

9. Procédé selon la revendication 1, dans lequel le mélange non durci de formation de lentille comprend une formulation d'hydrogel.

10. Procédé selon la revendication 1, dans lequel le mélange non durci de formation de lentille comprend au moins l'un des : acquafilcon A, balafilcon A, et lotrafilcon A.

11. Procédé selon la revendication 1, dans lequel le mélange non durci de formation de lentille comprend au moins l'un des : etafilcon A, genfilcon A, lenefilcon A, polymacon et galyfilcon A, et senofilcon A.

12. Procédé selon la revendication 1 dans lequel le mélange non durci de formation de lentille comprend du senofilcon A.

13. Procédé selon la revendication 1, dans lequel les surfaces de l'empreinte (105) formée par les deux ou plusieurs parties de moule (101, 102) comprennent une finition de surface de qualité optique formée dans une forme et une taille appropriées pour obtenir une incurvation avant d'une lentille ophtalmique et une incurvation arrière d'une lentille ophtalmique.

14. Procédé selon la revendication 1, dans lequel le catalyseur de Zieglar-Natta est un catalyseur entrant en jeu dans la création des chaînes polyoléfines.

15. Procédé selon la revendication 1, comprenant en outre l'étape d'hydratation de la formulation de lentille durcie jusqu'à ce qu'elle se détache de la partie de moule (101, 102) à laquelle elle adhère.

16. Procédé selon la revendication 1, comprenant en outre l'étape de lixiviation de lentille pour éliminer les agents de gêne oculaire aiguë.

17. Moule (100) destiné à former une lentille ophtalmique, comprenant :
◆ une première partie de moule (101) et une deuxième partie de moule (102) positionnées l'une par rapport à l'autre pour former une empreinte (105) d'une forme et d'une taille appropriées pour former une lentille ophtalmique ;
◆ au moins une de la première partie de moule (101) et de la deuxième partie de moule (102) comportant une surface de formation de lentille (103, 104) ; et
**caractérisé en ce qu'**au moins une de la première partie de moule (101) et de la deuxième partie de moule (102) est formée dans une résine polyoléfine basée sur un catalyseur de Zieglar-Natta ayant un indice de fluidité à chaud inférieur à 21 g/10 minutes.

18. Moule (100) selon la revendication 17, comprenant en outre un additif à la résine polyoléfine basée sur un catalyseur de Zieglar-Natta, approprié pour faciliter la séparation de la première partie de moule (101) et de la deuxième partie de moule (102).

19. Moule (100) selon la revendication 17, comprenant en outre un additif à la résine polyoléfine basée sur un catalyseur de Zieglar-Natta, approprié pour réduire l'adhésion de la lentille durcie à la surface de moulage (103, 104).

20. Moule selon la revendication 17, dans lequel le catalyseur de Zieglar-Natta est un catalyseur entrant en jeu dans la création des chaînes polyoléfines.
